# EUROPÄISCHE PATENTSCHRIFT

(11) **EP 1 458 483 B1**
(45) Veröffentlichungstag und Bekanntmachung des Hinweises auf die Patenterteilung: **08.01.2014**
(21) Anmeldenummer: 02777215.1
(22) Anmeldetag: 25.09.2002
(51) Int. Cl.: B01L 3/00, G01N 21/05

(54) **FLUSSKAMMER**
FLOW CHAMBER
CHAMBRE D'ECOULEMENT

(30) Priorität: 28.09.2001 DE 10148210; 28.09.2001 DE 20116019 U
(43) Veröffentlichungstag der Anmeldung: 22.09.2004
(73) Patentinhaber: ibidi GmbH, 82152 Martinsried (DE)
(72) Erfinder: KAHL, Johan-Valentin, 80636 München (DE)
(74) Vertreter: Grünecker, Kinkeldey, Stockmair & Schwanhäusser
(86) Internationale Anmeldenummer: PCT/EP2002/010770
(87) Internationale Veröffentlichungsnummer: WO 2003/029788

(56) Entgegenhaltungen:
- WO-A1-00/63670
- DE-A1- 19 738 626
- DE-U- 1 975 380
- GB-A- 2 071 355
- US-A- 4 237 096
- US-A- 5 786 182
- US-A- 6 159 749

## Beschreibung

### Gebiet der Erfindung

Die vorliegende Erfindung betrifft eine Flusskammer für lichtmikroskopische und lichtspektroskopische Untersuchungen nach dem Oberbegriff des Anspruchs 1 und ein Verfahren zur Probenpräparation für lichtmikroskopische Untersuchungen nach Anspruch 12.

Insbesondere betrifft die Erfindung eine Flusskammer mit der sowohl bewegliche als auch immobilisierte Moleküle, Makromoleküle oder Zellen mit verschiedenen lichtmikroskopischen sowie spektroskopischen Techniken (z.B. hochauflösende Mikroskopie, Fluoreszenzmikroskopie, Phasenkontrastmikroskopie, konfokale Mikroskopie, etc.) untersucht werden können.

### Stand der Technik

Objektträger und Probenschalen für zu untersuchende Proben werden bei den verschiedensten Untersuchungsmethoden eingesetzt und müssen daher vielen unterschiedlichen Anforderungen genügen. Beispielsweise werden viele biologisch-medizinische Untersuchungen mit Hilfe von lichtmikroskopischen und/oder spektroskopischen Techniken durchgeführt. Neben der reinen Lichtmikroskopie (z.B. zur Zelluntersuchung) werden immer öfter Methoden der Hochauflösenden-, Fluoreszenz-, Phasenkontrast- oder der Konfokalen-Mikroskopie sowie der UV-Spektroskopie verwendet. Auch werden Kombinationen dieser Methoden eingesetzt. Insbesondere die Analyse von Fluoreszenzsignalen ist von entscheidender Bedeutung, um spezifische Reaktionen nachzuweisen.

Dies geschieht zumeist über die qualitative Analyse der Fluoreszenz einer Lösung welche die zu untersuchenden Moleküle, Makromoleküle oder Zellen enthält (z.B. via Mikroskopie oder Spektroskopie). Dabei befinden sich sowohl die zu untersuchende Substanz, als auch 'Nachweismoleküle' für diese Substanzen, wie z.B. Antikörper, in Lösung. Dies führt dazu, dass sowohl verhältnismäßig große Mengen der nachzuweisenden Moleküle als auch der zu untersuchenden Substanz (oder Zellen) verwendet werden müssen.

Die für derartige Untersuchungen verwendeten Probenkammern, in denen sich die Lösung mit den Substanzen befindetn, sind zumeist aus Glas oder Quarzglas. Kunststoffbehältnisse werden, wegen der schlechten optischen Eigenschaft der meisten Kunststoffe (im Vergleich zu Glas), für diese Art der Untersuchungen kaum verwendet. Ausnahmen bilden Kunststoffschalen, die zum Mikroskop oder Spektrometer hin offen sind, so dass das vom Molekül emittierte Licht keinen Kunststoff auf seinem Weg zum Detektor hin durchlaufen muss.

Aus der DE 3102571 A1 ist beispielsweise eine Petrischale bekannt, die aus Kunststoff besteht und einen dünnen Boden von 0,17 mm für die Mikroskopie aufweist. Diese wird insbesondere für die Zellmikroskopie verwendet, weist jedoch kein Durchflusssystem auf. Sie besitzt auch kein Kanalsystem oder Resorvoire, um einen definierten Fluss anzulegen. Auch sind bei dieser Schale keine speziellen, auf die zu untersuchenden Substanzen abgestimmte Modifikationen des Kunststoffes vorgesehen.

Aus der US 5170286 ist eine Beobachtungskammer für Mikroskopie in Verbindung mit einem angeschlossenen Flusssystem bekannt. Es handelt sich dabei um eine "Sand-wich"-Konstruktion, die im wesentlichen aus einer speziellen Halterung besteht, in die Mikroskopie-Deckgläser eingelegt werden, welche durch Deckplatten fixiert werden. Dieses System besteht somit aus mindestens fünf verschiedenen Elementen die vor jedem Experiment zusammengefügt werden müssen. Dadurch ist z.B. ein steriles Arbeiten nur durch aufwendige Vorkehrungen gewährleistet. Auch müssen die verwendeten Deckgläser, die Halterung und die Deckplatten zwischen den Experimenten gereinigt werden. Der Durchfluss muss in dieser Kammer durch Schlauchverbindungen zu einem nicht auf der Kammer aufgebrachten Reservoir erzeugt werden. Dies beinhaltet das Risiko der Luftblasenbildung im Flusssystem.

Eine Oberflächenbehandlung oder Funktionalisierung zur spezifischen Immobilisierung von Molekülen oder Zellen der eingesetzten Deckgläser ist nicht vorgesehen. Auch müssen die eingesetzten Deckgläser durch Dichtungsringe abgedichtet werden. Dies kann erfahrungsgemäß oft zu Undichtigkeiten führen und dazu, dass in der Lösung befindliche Moleküle aufgrund eines Kontaktes mit dem Dichtungsring ihre funktionelle Struktur verändern oder an diesem absorbieren. Dies gilt auch für die Halterung, in welcher die Kanäle eingebracht sind.

In der WO 97/38300 ist ein Mikrokanalsystem aus Acryl beschrieben, das der elektrophoretischen Auftrennung dient. Der Mikrokanal wird jedoch nicht zum Durchspülen von Flüssigkeiten oder zur hochauflösenden Mikroskopie verwendet. Auch hat Acryl keine ausreichend guten optischen Eigenschaften, um hochwertige Mikroskopie durchzuführen. Die Innenwände dieses Kanalsystemes werden auch nicht oberflächenbehandelt, mit dem Zweck dort spezifische Reaktionen analysieren zu können. Die Analyse der in dieses Kanalsystem eingebrachten Makromoleküle findet in einem eingebrachten Gel statt. Auch werden in den Kanal eingebrachte Moleküle nicht durch einen angelegten hydrodynamischen Fluß, sondern durch Verwendung von elektrischen Feldern bewegt.

Die meisten Techniken mit herkömmlichen Probenkammern erlauben nur eine quantitative und keine qualitative Analyse der Signale. Auch stellt sich der Lösungsmittelaustausch, z.B. bei der Verwendung einer Glasküvette zur Verdünnung, als sehr aufwendig dar. Der einfache Austausch von Flüssigkeiten in einer Probenkammer ist jedoch notwendig, um spezielle Reaktionen von Molekülen in der Flüssigkeit mit anderen Molekülen, Makromolekülen, Zellen, etc. nachzuweisen, oder um überflüssige Moleküle, welche sich in der Flüssigkeit befinden, herauszuspülen. Zudem können überschüssige Moleküle das Fluoreszenzsignal oder Spektrum des zu untersuchenden Moleküls oder Molekülkomplexes abschwächen oder auslöschen.

Aus der DE 197 38 626 sind Mikrodurchfluss- und Kulturküvetten bekannt. Die Küvetten umfassen einen Grundkörper mit einem Träger- mit einem Deckglas sowie verklebte Silikonböcke als Halterungen für Ein- und Auslaufstutzen.

Aus der GB 2071 355 ist eine Flüssigkeitszelle für spektroskopische Analysen bekannt. Die Zelle wird durch eine erste Platte, die ein optisches Fenster ist, eine Rückhalteplatte aus Edelstahl und eine zwischen den Platten angeordnete Dichtung gebildet.

Aus der WO 00/63670 ist eine Probenkammer bekannt, die dadurch gebildet wird, dass ein Gehäuse gegen einen Mikroskopträger abgedichtet wird.

### Beschreibung der Erfindung

Es ist die Aufgabe der vorliegenden Erfindung, eine Flusskammer zu entwickeln, die einen schnallen und einfachen Durchfluss und Austausch von Flüssigkeiten erlaubt, die zudem eine problemlose Durchführung der genannten Untersuchungen und eine Immobilisierung von Molekülen, Makromolekülen oder ganzen Zellen ermöglicht und durch die sich die für eine Untersuchung erforderliche Menge an Nachweismolekülen reduzieren lässt. Ferner soll eine Flusskammer bereitgestellt werden, die einfach herzustellen und zu bedienen ist.

Eine weitere Aufgabe der Erfindung ist es ein Verfahren bereit zu stellen, das die Durchführung der genannten Untersuchungsmethoden erleichtert und neue Untersuchungsmöglichkeiten eröffnet.

Diese Aufgabe wird durch eine Flusskammer nach den kennzeichnenden Merkmalen des Anspruchs 1 und durch das Verfahren nach Anspruch 12 gelöst. Vorteilhafte Ausgestaltungen gehen aus den Unteransprüchen hervor.

Demnach weist eine Flusskammer aus Kunststoff als Objektträger für lichtmikroskopische Untersuchungen in einer Grundplatte wenigstens einen Kanal mit einer bevorzugten Breite von 0,01 - 20,0 mm und einer bevorzugten Höhe von 0,01 - 5 mm auf. Sowohl die Eingangsöffnung als auch die Ausgangsöffnung des Kanals ist an ein auf der Oberfläche angeordnetes Flüssigkeitsreservoir angeschlossen. Durch die Verbindung der beiden Reservoire durch den Kanal kann ein kommunizierendes System entstehen bzw. entsteht ein kommunizierendes System.

Vorzugsweise sind auf der einen Oberfläche der Grundplatte die wenigstens zwei Flüssigkeitsreservoire und an der gegenüberliegenden Oberfläche der Grundplatte der wenigstens eine Kanal angeordnet. Damit kann die Flusskammer in vorteilhafter Weise für Verfahren der inversen Mikroskopie verwendet werden. Insbesondere wird das Mikroskop nicht durch die Flüssigkeitsreservoire behindert, da sich diese auf der anderen Seite der Grundplatte befinden.

Vorteilhafterweise umfasst der wenigstens eine Kanal einen in der Grundplatte ausgebildeten Graben. Durch ein Aufbringen einer Abdeckung auf der Grundplatte der Flusskammer kann der Graben geschlossen und somit ein geschlossener Kanal gebildet werden. Die Abdeckung ist in Form einer Folie ausgebildet sein. Das kommunizierende System entsteht dann durch das Aufbringen der Abdeckung. Somit wird erfindungsgemäß eine Flusskammer mit einer Abdeckung bereitgestellt.

Bei dem erfindungsgemäßen Verfahren wird ein Probenfluss durch ein System kommunizierender Röhren erzeugt, indem ein Reservoir einer Lösung mit der Probe über einen dünnen Kanal mit wenigstens einem weiteren Reservoir verbunden und der Füllstand der Reservoire zu Beginn der Untersuchung unterschiedlich ist. Vorzugsweise wird zur Durchführung des Verfahrens eine Flusskammer verwendet, wie sie oben beschrieben ist.

Eine zu untersuchende Probenflüssigkeit wird zur Untersuchung in eines der Flüssigkeitsreservoire eingefüllt. Das andere Reservoir kann zunächst leer bleiben oder mit einer passenden Lösung zum Teil gefüllt werden. Wesentlich ist jedoch, dass der Flüssigkeitsstand in den beiden Reservoiren unterschiedlich ist. In diesem Fall fließt die Flüssigkeit aufgrund von Gravitations- und Kapillarkräften durch den Kanal, ohne dass zusätzliche Hilfsmittel erforderlich sind.

Mit der erfindungsgemäßen Flusskammer wird ein unkomplizierter und zugleich zuverlässiger Durchfluss einer zu untersuchenden Probe durch den Kanal sichergestellt. Untersuchungen von Molekülen, etc. mit Hilfe dieser Flusskammer können daher schnell und effizient durchgeführt werden, da auch kein kompliziertes externes Kanalsystem angeschlossen werden muss. Durch die unmittelbare Nähe der Probenreservoire am Untersuchungsort, d. h. dem Kanal, kann die erforderliche Probenmenge stark reduziert werden. Die vorgenannten Nachteile herkömmlicher Probenkammern werden daher vermieden.

In einer bevorzugten Ausführungsform der Erfindung für hochempfindliche Untersuchungsmethoden besteht die Flusskammer aus einem optisch hochwertigen Kunststoff, d. h. der Kunststoff weist keine Doppelbrechung und/oder Autofluoreszenz auf. Hierfür können beispielsweise cyclische Olefine und Polycarbonat verwendet werden. Ferner weist der Boden und/oder die Decke des Kanals der Flusskammer, entsprechend den Erfordernissen der verwendeten Untersuchungsmethode bevorzugt eine Dicke auf, die geringer als 190 µm ist. Dadurch werden optimale Eigenschaften für eine Vielzahl von Untersuchungsverfahren erreicht.

Die Flüssigkeitsreservoire haben vorteilhafterweise einen Durchmesser von 1-20 mm und eine Höhe von 3-30 mm. Ferner können sie trichterförmig ausgebildet sein, wobei dieser Trichter in die Ein- bzw. Ausgangsöffnung des Kanals mündet. Dadurch verbleiben keine Rückstände der Probe in dem Flüssigkeitsreservoir und die notwendige Probenmenge für eine Untersuchung kann weiter reduziert werden.

Gemäß einer vorteilhaften Weiterbildung umfassen die Flusskammer und/oder die Abdeckung wenigstens einen Bereich mit einer vorherbestimmten Gasdurchlässigkeit. Diese Gasdurchlässigkeit kann insbesondere nur für bestimmte Gase, wie CO₂, O₂ und N₂, ausgebildet sein. Dadurch können bevorzugte Begasungen beispielsweise von Zellen in dem Flusssystem durch unterschiedliche, die Kammer umgebende Gasatmosphären ermöglicht werden. Die lokale Gaspermeabilität kann insbesondere nicht nur durch das Material sondern auch durch die Materialdicke eingestellt werden. Weiterhin können unterschiedliche Bereiche eine unterschiedliche Gasdurchlässigkeit aufweisen, so dass nur bestimmte Bereiche der Kammer mit bestimmten Gasen versorgt werden.

Vorzugsweise können mehrere Abdeckungen (z.B. Folien) übereinander auf der Grundplatte angeordnet sein. Durch ein Entfernen oder Hinzufügen von Abdeckungen kann die Gaspermeabilität verändert werden. Insbesondere können die Abdeckungen derart angeordnet werden, dass sie sich leicht entfernen lassen.

In einer weiteren bevorzugten Ausführungsform der erfindungsgemäßen Flusskammer sind die Kanten des Kanals, mit welchen dieser an die Ein- und Ausgangsöffnungen grenzt, abgerundet. Dadurch kommt es am Ausfluß bzw. am Einfluß der Probenflüssigkeit nicht zur Bildung eines Tropfens aufgrund von Oberflächenspannung und es wird ein ungehindertes Weiterfließen der Flüssigkeit sichergestellt. Die Oberflächen des Kanals können im Bereich des Aus- und Einflusses, je nach den vorgegebenen Eigenschaften der verwendeten Flüssigkeit, auch eine hydrophile oder hydrophobe Oberfläche besitzen, um Benetzungsphänomene für den Flüssigkeitstransport zu nutzen.

Gemäß einer vorteilhaften Weiterbildung weist wenistens ein Bereich der Flusskammer und/oder der Abdeckung eine Oberflächenbeschichtung auf. Dadurch kann eine vorbestimmte Adhäsion (z.B. besonders stark oder schwach) von Zellen erzielt werden. Entsprechende Oberflächenstrukturen können zwischen 10µm und einigen Zentimetern liegen:

Für bestimmte Untersuchungsmethoden, wie z. B. Wechselwirkungsuntersuchungen zwischen Molekülen ist es wünschenswert, die Moleküle, Makromoleküle oder Zellen zu immobilisieren. Hierfür kann eine innere Oberfläche des Kanals oberflächenbehandelt oder funktionalisiert sein, z. B. durch Molekülgruppen, wie -COOH, -NH2, Ketone, Alkohole oder durch Makromoleküle, wie DNA oder Proteine. Die auf dieser Oberfläche immobilisierten Proben können bei Reaktion mit einem in Lösung befindlichen Stoff (z. B. Molekül) eine charakteristische Änderung ihres Spektrums aufweisen oder ein charakteristisches Fluoreszenzsignal aussenden. Mit Hilfe der erfindungsgemäßen Flusskammer ist es möglich, die in Lösung befindlichen Moleküle herauszuspülen, so dass dieses Signal störungsarm quantitativ analysiert werden kann.

Die Kammer, d.h. die Flüssigkeitsreservoire und die Grundplatte, besteht in einer bevorzugten Ausführungsform aus einem Stück. Es gibt somit keine Elemente, die vor der Benutzung gereinigt werden müssen, und sie kann mit geringem Aufwand steril gehalten werden. Sie muss auch vor der Benutzung nicht aufwendig zusammengefügt werden. Ist die Flusskammer mit zur Oberfläche offenen Kanälen (Gräben), wie oben beschrieben, ausgebildet, muß dann lediglich noch eine Abdeckung aufgebracht werden. In dieser Ausführungsform ist sie normalerweise auch nur zur einmaligen Benutzung vorgesehen.

Gemäß einer vorteilhaften Weiterbildung ist die Flusskammer als Spritzgußteil ausgebildet. Damit ergibt sich eine besonders einfache und kostengünstige Herstellungsweise.

Gemäß einer weiteren vorteilhaften Weiterbildung ist auf der Oberfläche der Grundplatte, an der der wenigstens eine Kanal angeordnet ist, ein Rahmen angeordnet. Der Rahmen kann insbesondere entlang des gesamten oder eines Teils des Umfangs der Grundplatte angeordnet sein. Damit wird eine präzise Anordnung der Abdeckung auf der Grundplatte ermöglicht. Die Höhe des Rahmens kann gleich der Dicke der Abdeckung sein. Gemäß einer vorteilhaften Alternative ist der Rahmen höher als die Dicke der Abdeckung, wodurch der Rahmen auch als Abstandhalter dient, was ein Zerkratzen der Abdeckung verhindert. Vorzugsweise weist der Rahmen eine Höhe zwischen 1µm und 1mm und eine Breite von 1µm und 1 mm auf. Ein weiterer Vorteil des Rahmens besteht darin, dass er die Flusskammer mechanisch stabilisiert und insbesondere eine Verformung der Kammer bei einem Abkühlen in einer Spritzgußform verringert oder minimiert.

Gemäß einer vorteilhaften Alternative umfasst die Abdeckung einen Rahmen. Beispielsweise ist eine Folie auf oder in einen Rahmen gespannt. Diese Abdeckung kann fest mit der Grundplatte der Flusskammer verbunden werden und diese stabilisieren.

Gemäß einer vorteilhaften Weiterbildung ist wenigstens ein Flüssigkeitsreservoir derart ausgebildet, dass bei verschlossener Ein- und Ausgangsöffnung des angeschlossenen Kanals eine Steckereinrichtung zum luftdichten Verschließen in das Flüssigkeitsreservoir eingeführt werden kann. Unter einer Steckereinrichtung zum luftdichten Verschließen ist eine Steckereinrichtung zu verstehen, die, wenn sie mit dem Flüssigkeitsreservoir in Eingriff gebracht ist, dieses luftdicht verschließen kann. Bei einem Einführen einer solchen Steckereinrichtung, beispielsweise einer gefüllten Pipette, kann also die hierdurch verdrängte Luft aus dem Flüssigkeitsreservoir nach außen entweichen, selbst wenn der angeschlossene Kanal beispielsweise mit Flüssigkeit gefüllt ist. Eine Möglichkeit bietet eine seitlich in dem Flüssigkeitsreservoir in geeigneter Höhe angeordnete Öffnung zum Entlüften. Gemäß einer bevorzugten Alternative ist das Flüssigkeitsreservoir in sich zur Öffnung konisch erweiternder Form ausgebildet. Solche Flüssigkeitsreservoire bieten den Vorteil, dass Steckereinrichtungen zum luftdichten Verschließen eingeführt werden können, ohne dass ein vorhandener Flüssigkeitspegel verändert wird, solange sich die Stekkereinrichtung oberhalb des Flüssigkeitspegels befindet. Vorzugsweise wird der Flüssigkeitspegel und/oder die Form des Flüssigkeitsreservoirs so gewählt, dass die Steckereinrichtung oberhalb des Flüssigkeitspegels mit dem Flüssigkeitsreservoir in Eingriff gebracht wird, insbesondere also die Flüssigkeit höchstens berührt aber nicht in die Flüssigkeit eintaucht.

Gemäß einer vorteilhaften Weiterbildung aller zuvor beschriebenen Flusskammern ist wenigstens eine Ein- oder Ausgangsöffnung eines Kanals auf einer vorbestimmten Höhe eines Flüssigkeitsreservoirs angeordnet. Dies hat einerseits den Vorteil, dass erst ab einem bestimmten Flüssigkeitsstand die Flüssigkeit in den Kanal fließen kann. Andererseits kann damit nach dem Prinzip der kommunizierenden Röhren ein vorbestimmter Flüssigkeitsstand in anderen Flüssigkeitsreservoiren eingestellt werden.

### Detaillierte Beschreibung der Erfindung

Bevorzugte Ausführungsformen einer Flusskammer gemäß der vorliegenden Erfindung werden an Hand der Zeichnung näher erläutert. In dieser stellen dar:
Fig. 1: die perspektivische Ansicht einer Flusskammer nach der vorliegenden Erfindung,
Fig. 2: einen Längsschnitt durch eine erfindungsgemäße Flusskammer,
Fig. 3: einen vergrößerten Ausschnitt der Flusskammer aus Figur 2,
Fig. 4: einen Längsschnitt durch eine weitere Ausführungsform der Flusskammer,
Fig. 5: eine perspektivische Ansicht der Ausführungsform der Flusskammer aus Figur 4, und

nitt durch eine weitere Ausführungsform einer Flusskammer.

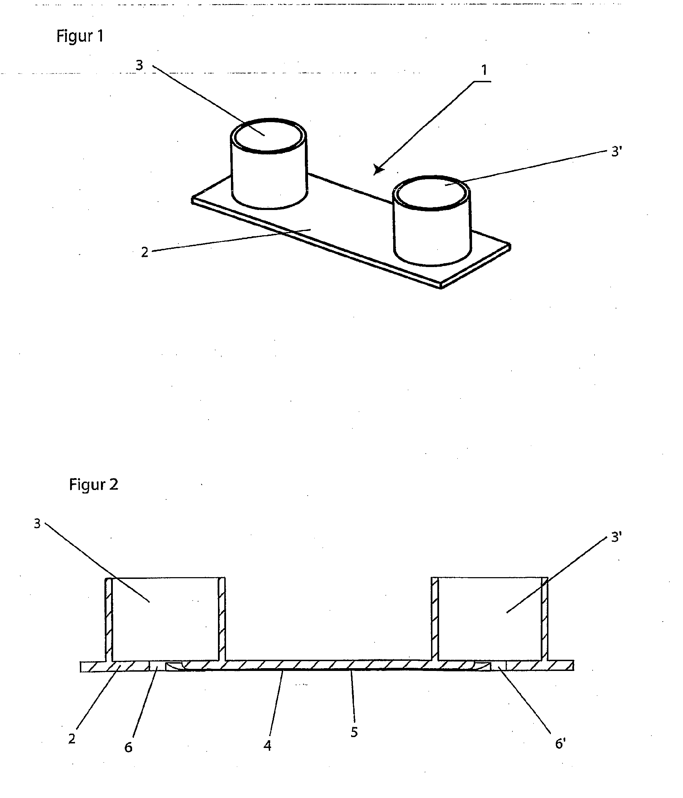

In Figur 1 ist eine Ausführungsform einer Flusskammer 1 mit einer Grundplatte 2 und zwei kreisförmigen Flüssigkeitsreservoiren 3 und 3' gezeigt. Die Flusskammer 1 besteht aus Kunststoff, wobei hierfür bevorzugt Polycarbonat oder cyclische Olefine verwendet werden. Cyclische Olefine weisen eine geringe Autofluoreszenz sowie eine geringe Doppelbrechung auf und bieten somit optimale optische Eigenschaften. Die Grundplatte 2 hat die typischen Außenmasse von ca. 26 x 76 mm. In dieser Form ist die Kammer auf einfache Weise auf einem Probentisch eines beliebigen Mikroskops zu befestigen. Außerdem kann sie leicht sterilisiert und steril gehalten werden.

Figur 2 stellt einen Schnitt in Längsrichtung durch Figur 1 dar. Innerhalb der Grundplatte 2 verläuft ein Kanal 4 mit Ein- und Ausgangsöffnungen 6 und 6', die nach oben aus der Grundfläche 2 weisen. Die Flüssigkeitsreservoire 3 und 3' werden durch den Kanal 4 miteinander verbunden. Die Reservoire weisen typischerweise einen Außendurchmesser von 18 mm und eine Höhen von 18 mm auf. Der Durchmesser kann jedoch von 1-30 mm und die Höhe von 3-30 mm variieren. Bei einem unterschiedlichen Flüssigkeitsstand in den beiden Reservoiren kann die Flüssigkeit aufgrund der Gravitation und der Kapillarkräfte durch den Kanal fließen.

Zur Bildung eines Kanals 4, der knapp unterhalb der unteren Oberfläche der Platte verläuft, ist in die Grundplatte 2 eine Aussparung bzw. ein Graben eingebracht, die zwischen 0,1 - 5 mm tief und 0,1-3 mm breit ist. Der Kanal könnte auch durch eine entsprechende Aussparung knapp unter der oberen Oberfläche der Platte vorgesehen sein. Typischerweise wird die Grundplatte 2 als Spritzgußteil hergestellt; insbesondere werden Grundplatte und Flüssigkeitsreservoire als ein Spritzgußteil hergestellt. Über der Aussparung in der Grundplatte 2 ist eine Folie 5 angeordnet, die die Aussparung abdeckt und den Boden bzw. den Deckel des Kanals 4 bildet. Die Folie kann z.B. durch Verkleben, Heißpressen oder Laminieren über der Grundplatte angebracht werden. Außerdem kann die Folie 5 schon vor dem Aufbringen auf die Grundplatte physikalisch oder chemisch oberflächenbehandelt werden, um z. B. eine Immobilisierung der Probe zu ermöglichen, wie vorher beschrieben wurde.

Um die Flusskammer 1 der hochauflösenden Mikroskopie zugänglich zu machen, ist die Folie 5 in einem für die Untersuchungen wesentlichen Bereich dünner als 0,2 mm, typischerweise zwischen 0,1 und 0,2 mm. Die Folie 5 ist aus einem hochtransparenten Kunststoff. Um einen Kondensor eines Mikroskopes einsetzen zu können, sind die hierfür wesentlichen Bereiche der Flusskammer 1 nicht höher als 10 mm. Die Grundplatte 2 kann dann ebenfalls aus hochtransparenten Kunststoffen sein.

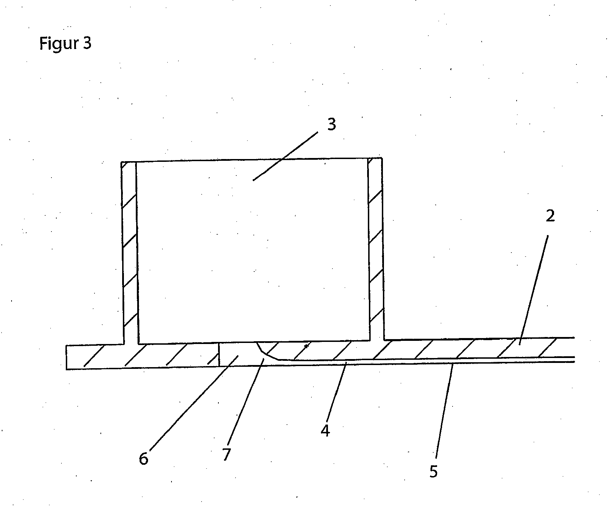

In Figur 3 ist die Anordnung des Flüssigkeitsreservoirs 3 über einer Ein- bzw. Ausgangsöffnung 6, 6' gezeigt. Die Kante am Übergang des Kanals 4 in die Eingangsöffnung 6 weist eine Abrundung 7 in Form eines Meniskus auf. In einem Kanalbereich vor der Öffnung 6, kann die Oberfläche des Kanals hydrophil oder hydrophob ausgebildet sein. Dies kann wiederum z. B. durch eine Oberflächenbehandlung der Folie 5 oder der Aussparung in der Grundplatte 2 vor dem Aufbringen der Folie erfolgen. Durch die Abrundung 7 oder die eben geschilderte Oberflächenbeschaffenheit können Oberflächenspannungen und Tropfenbildung, die den Flüssigkeitsstrom behindern, vermieden werden.

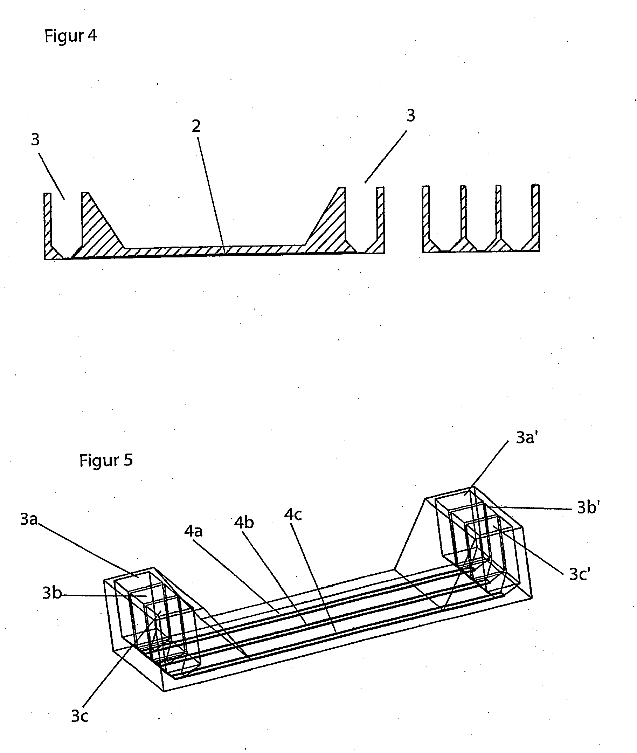

Die Ausführungsform der Flusskammer 1 in Figur 4 weist Flüssigkeitsreservoire 3 und 3' auf, die trichterförmig in die Ein- und Ausgangsöffnungen 6 und 6' münden. In Figur 5 sind drei nebeneinander verlaufende Kanäle 4a, 4b und 4c mit den entsprechenden Flüssigkeitsreservoiren 3a, 3a', 3b, 3b', 3c und 3c' gezeigt. Als eine Weiterentwicklung kann die Anzahl der Kanäle zwischen 12 und 96 Stück betragen. Die Außenmasse der Grundplatte betragen dann typischerweise 126 X 85 mm.

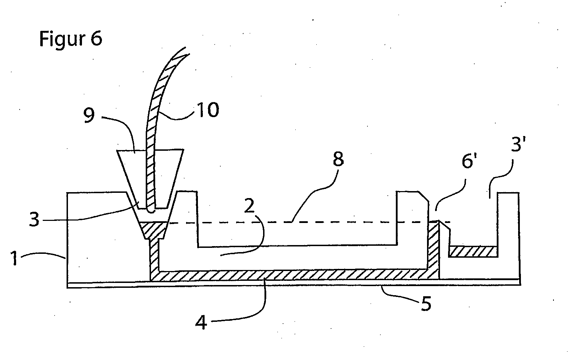

In Fig. 6 ist eine Ausführungsform einer Flusskammer 1 mit einem sich konisch erweiternden Flüssigkeitsreservoir 3 gezeigt. Das Flüssigkeitsreservoir 3 ist bis zu einem vorherbestimmten Pegel 8 mit Flüssigkeit gefüllt, wobei sich der Pegel nach dem Prinzip der kommunizierenden Röhren aus der Höhe der Ausgangsöffnung 6' des Reservoirs 3' ergibt. In das Reservoir 3 kann eine Steckereinrichtung 9 eingeführt werden, deren Form an die Form des Flüssigkeitsreservoirs 3 angepasst ist. Die Steckereinrichtung 9 ist mit einem mit Flüssigkeit gefüllten Schlauch 10 verbunden. Sobald die Steckereinrichtung 9 mit dem Flüssigkeitsreservoir 3 in Eingriff gebracht ist, verschließt sie das Reservoir luftdicht. Die Steckereinrichtung 9 wird dann flächig an der Innenseite des Reservoirs 3 anliegen, so dass sich zwischen der Innenseite des Reservoirs 3 und der zur Innenseite des Reservoirs gerichteten Seite der Steckereinrichtung 9 keine Flüssigkeit befinden wird. Damit kann das Reservoir 3 und der Kanal 4 für einen Flüssigkeitswechsel vollständig durchgespült werden, ohne dass Flüssigkeitsreste in dem Reservoir 3 verbleiben. Der Flüssigkeitspegel 8 ist so gewählt, dass die in Eingriff gebrachte Steckereinrichtung 9 direkt oberhalb der Flüssigkeitsoberfläche angeordnet sein wird. Zwischen Flüssigkeit und Steckereinrichtung befindet sich dann keine Luftblase mehr. Die Anschrägung der Ausgangsöffnung 6' erlaubt ein optimales Abfließen in das Reservoir 3'.

Die gezeigten Ausführungsformen sind beispielhaft und es ist offensichtlich, dass eine Vielzahl weiterer Ausgestaltungen einer Flusskammer im Sinne der vorliegenden Erfindung möglich sind, wie z.B. die Kreuzung von zwei Kanälen oder das Zusammenlaufen von zwei Kanälen in einem Einzigen.

### Bezugszeichen

- 1: Flusskammer
- 2: Grundplatte
- 3: Flüssigkeitsreservoir
- 3': Flüssigkeitsreservoir
- 3a: Flüssigkeitsreservoir
- 3a': Flüssigkeitsreservoir
- 3b: Flüssigkeitsreservoir
- 3b': Flüssigkeitsreservoir
- 3c: Flüssigkeitsreservoir
- 3c': Flüssigkeitsreservoir
- 4: Kanal
- 4a: Kanal
- 4b: Kanal
- 4c: Kanal
- 5: Folie
- 6: Eingangsöffnung
- 6': Ausgangsöffnung
- 7: Abrundung
- 8: Flüssigkeitspegel
- 9: Steckereinrichtung
- 10: Schlauch

## Patentansprüche

1. Flusskammer als Probenträger für licht-mikroskopische Untersuchungen, wobei die Flusskammer in einer Grundplatte (2) einen oder mehrere Kanäle (4) aufweist, wobei eine Ein- und Ausgangsoffnung (6, 6') eines Kanals jeweils an ein Flüssigkeitsreservoir (3, 3') angeschlossen ist und die Reservoire mit dem einen oder den mehreren Kanälen ein kommunizierendes System darstellen,
**dadurch gekennzeichnet, dass** die Flusskammer aus Kunststoff ist, die Flüssigkeitsreservoire (3, 3') auf einer Oberfläche der Grundplatte (2) und der wenigstens eine Kanal (4) an der gegenüberliegenden Oberfläche angeordnet sind, und
der wenigstens eine Kanal (4) einen in.der Grundplatte (2) ausgebildeten Graben umfasst, der durch eine auf der Grundplatte aufgebrachten Folie (5) abgedeckt ist.

2. Flusskammer nach einem der vorangegangenen Ansprüche, wobei die Flusskammer als ein Stück, insbesondere als Spritzgussteil, ausgebildet ist.

3. Flusskammer nach einem der vorhergehenden Ansprüche, wobei ein Kanal (4) eine Breite von 0,01 - 20,0 mm und eine Höhe von 0,01 - 5 mm aufweist.

4. Flusskammer nach einem der vorangegangenen Ansprüche, wobei die Flüssigkeitsreservoire (3, 3') direkt an die Ein- und Ausgangsöffnung (6, 6') eines Kanals anschließen und/oder wobei die Grundplatte (2) aus nicht doppelbrechendem und autofluoreszierendem Kunststoff, insbesondere aus cyclischen Olefinen oder Polycarbonat, besteht.

5. Flusskammer nach einem der vorhergehenden Ansprüche, wobei der Boden und/oder die Decke eines Kanals (4) eine Dicke von weniger als 0,2 mm aufweist und aus optisch hochwertigem Kunststoff besteht.

6. Flusskammer nach einem der vorhergehenden Ansprüche, wobei ein Flüssigkeitsreservoir (3, 3') einen Durchmesser von 1-20 mm und eine Höhe von 3-30 mm aufweist und/oder wobei ein Flüssigkeitsreservoir (3, 3') trichterförmig in die Eingangsöffnung (6) und/oder Ausgangsöffnung (6') eines Kanals (4) mündet.

7. Flusskammer nach einem der vorhergehenden Ansprüche, wobei ein Kanal (4) an wenigstens einer der Kanten zur Ein- und/oder Ausgangsöffnung (6, 6') eine Abrundung (7) aufweist und/oder wobei Bereiche der Kanalwände vor der Ein- und/oder Ausgangsöffnung eine hydrophobe oder hydrophile Oberfläche aufweisen.

8. Flusskammer nach einem der vorhergehenden Ansprüche, **dadurch gekennzeichnet, dass** wenigstens eine innere Oberfläche eines Kanals chemisch und/oder physikalisch oberflächenbehandelt und/oder durch reaktive Gruppen, insbesondere aus - COOH, -NH2, Ketonen, Alkoholen, und/oder durch Makromoleküle funktionalisiert ist.

9. Flusskammer nach einem der vorhergehenden Ansprüche, wobei die Flusskammer wenigstens einen Bereich mit einer vorherbestimmten Gasdurchlässigkeit aufweist.

10. Flusskammer nach einem der vorhergehenden Ansprüche, wobei wenigstens zwei Kanäle (4) in der Grundplatte (2), insbesondere in einem Wankel von 90°, gekreuzt sind und/oder wobei wenigstens zwei Kanäle (4) zu einem Kanal zusammengeführt sind.

11. Flusskammer nach einem der vorangegangenen Ansprüche, wobei wenigstens eine Ein- und/oder Ausgangsöffnung (6, 6') eines Kanals (4) auf einer vorherbestimmten Höhe eines Flüssigkeitsreservoirs (3, 3') angeordnet ist.

12. Verfahren zur Probenpräparation für lichtmikroskopische Untersuchungen unter Verwendung einer Flusskammer nach einem der Ansprüche 1 bis 11, wobei ein Probenfluss durch ein System kommunizierender Röhren erzeugt wird, indem ein Reservoir einer Lösung mit der Probe über einen dünnen Kanal mit wenigstens einem weiteren Reservoir verbunden und der Füllstand der Reservoire zu Beginn der Untersuchung unterschiedlich ist.

## Claims

1. Flow chamber as a sample carrier for light-optical examinations, wherein the flow chamber comprises one or a plurality of channels (4) in a base plate (2), wherein an inlet and an outlet opening (6,6') of a channel is connected to a liquid reservoir (3,3') and the reservoirs with the one or the plurality of channels represent a communicating system,
**characterized in that**
the flow chamber is made of plastics,
the liquid reservoirs (3,3') are arranged on a surface of the base plate (2) and the at least one channel (4) is arranged on the opposite surface, and
the at least one channel (4) comprises a trench formed in the base plate (2), which is covered by a foil (5) applied to the base plate.

2. Flow chamber as claimed in one of the preceding claims, wherein the flow chamber is formed as one piece, in particular as an injection molding part.

3. Flow chamber as claimed in one of the preceding claims, wherein a channel (4) has a width of 0.01 to 20.0 mm and a height of 0.01 to 5 mm.

4. Flow chamber as claimed in one of the preceding claims, wherein the liquid reservoirs (3,3') directly adjoin the inlet and outlet opening (6,6') of a channel and/or wherein the base plate (2) is made of non-birefringent and auto-fluorescent plastics, in particular of cyclic olefins or polycarbonate.

5. Flow chamber as claimed in one of the preceding claims, wherein the bottom and/or the cover of a channel (4) has a thickness of less than 0.2 mm and is made of an optically high-class plastic.

6. Flow chamber as claimed in one of the preceding claims, wherein a liquid reservoir (3,3') has a diameter of 1 to 20 mm and a height of 3 to 30 mm and/or wherein a liquid reservoir (3,3') opens in a funnel-like manner into the inlet opening (6) and/or outlet opening (6') of a channel (4).

7. Flow chamber as claimed in one of the preceding claims, wherein a channel (4) has a rounding (7) on at least one of the edges towards the inlet and/or outlet opening (6,6') and/or wherein portions of the channel walls in front of the inlet and/or outlet opening have a hydrophobic or a hydrophilic surface.

8. Flow chamber as claimed in at least one of the preceding claims, **characterized in that** at least an inner surface of a channel is chemically and/or physically surface-treated and/or is functionalized by reactive groups, in particular consisting of -COOH, -NH2, ketones or alcohols, and/or by macromolecules.

9. Flow chamber as claimed in one of the preceding claims, wherein the flow chamber comprises at least a portion with a predetermined gas permeability.

10. Flow chamber as claimed in at least one of the preceding claims, wherein at least two channels (4) are intersected in the base plate (2), in particular at an angle of 90°, and/or wherein at least two channels (4) are joined to form one channel.

11. Flow chamber as claimed in one of the preceding claims, wherein at least one inlet and/or outlet opening (6,6') of a channel (4) is arranged on a predetermined level of a liquid reservoir (3,3').

12. Method of preparing samples for light-optical examinations by using a flow chamber according to one of claims 1 to 11, wherein a sample flow is generated by a system of communicating pipes in that a reservoir of a solution with the sample is connected via a thin channel with at least one further reservoir and the filling level of the reservoirs differs at the beginning of the examination.

## Revendications

1. Chambre d'écoulement servant de porte-échantillon pour des examens de microscopie optique, dans laquelle la chambre d'écoulement comporte un ou plusieurs canaux (4) dans une plaque de base (2), dans laquelle un orifice d'entrée et de sortie (6, 6') d'un canal est connecté à un réservoir de fluide respectif (3, 3') et les réservoirs constituent avec lesdits un ou plusieurs canaux un système communicant,
**caractérisée en ce que** la chambre d'écoulement est réalisée en plastique, **en ce que** les réservoirs de fluide (3, 3') sont agencés sur une surface de la plaque de base (2) et ledit au moins un canal (4) sur la surface opposée, et
ledit au moins un canal (4) comporte une gorge constituée dans la plaque de base (2) qui est recouverte par un film (5) appliqué sur la plaque de base.

2. Chambre d'écoulement selon l'une des revendications précédentes, dans laquelle la chambre d'écoulement est constituée d'une seule pièce, en particulier sous forme d'une pièce moulée par injection.

3. Chambre d'écoulement selon l'une des revendications précédentes, dans laquelle un canal (4) présente une largeur de 0,01 à 20,0 mm et une hauteur de 0,01 à 5 mm.

4. Chambre d'écoulement selon l'une des revendications précédentes, dans laquelle les réservoirs de fluide (3, 3') sont connectés directement à l'orifice d'entrée et de sortie (6, 6') d'un canal, et/ou dans laquelle la plaque de base (2) est réalisée en plastique non biréfringent et autofluorescent, en particulier un alcène cyclique ou du polycarbonate.

5. Chambre d'écoulement selon l'une des revendications précédentes, dans laquelle le fond et/ou le recouvrement d'un canal (4) présente une épaisseur inférieure à 0,2 mm et est constitué d'un plastique à haute qualité optique.

6. Chambre d'écoulement selon l'une des revendications précédentes, dans laquelle un réservoir de fluide (3, 3') présente un diamètre de 1 à 20 mm et une hauteur de 3 à 30 mm, et/ou dans laquelle un réservoir de fluide (3, 3') débouche sous forme d'un entonnoir dans l'orifice d'entrée (6) et/ou l'orifice de sortie (6') d'un canal (4).

7. Chambre d'écoulement selon l'une des revendications précédentes, dans laquelle un canal (4) comporte un arrondi (7) sur au moins un des côtés de l'orifice d'entrée et/ou de sortie (6, 6'), et/ou dans laquelle des zones des parois de canal avant ledit orifice d'entrée et/ou de sortie comportent une surface hydrophobe ou hydrophile.

8. Chambre d'écoulement selon l'une des revendications précédentes, **caractérisée en ce qu'**au moins une surface interne d'un canal a reçu un traitement chimique et/ou physique, et/ou est fonctionnalisée par des groupes réactifs, en particulier des groupes -COOH ou -NH2, des cétones, des alcools et/ou des macromolécules.

9. Chambre d'écoulement selon l'une des revendications précédentes, dans laquelle la chambre d'écoulement comporte au moins une zone présentant une perméabilité aux gaz prédéterminée.

10. Chambre d'écoulement selon l'une des revendications précédentes, dans laquelle au moins deux canaux (4) se croisent dans la plaque de base (2), en particulier selon un angle de 90°, et/ou dans laquelle au moins deux canaux (4) se rejoignent pour constituer un seul canal.

11. Chambre d'écoulement selon l'une des revendications précédentes, dans laquelle au moins un orifice d'entrée et/ou de sortie (6, 6') d'un canal (4) est agencé à une hauteur prédéterminée d'un réservoir de fluide (3, 3').

12. Procédé de préparation d'échantillon pour des examens de microscopie optique en utilisant une chambre d'écoulement selon l'une des revendications 1 à 11, dans lequel un écoulement d'échantillon est obtenu à travers un système de tuyaux communicants, dans lequel un réservoir d'une solution de l'échantillon est connecté à au moins un autre réservoir via un fin canal, et dans lequel le niveau de remplissage des réservoirs au début de l'analyse est déterminant.
